Europäisches Patentamt

European Patent Office

Office européen des brevets

(19)

(11) **EP 1 403 662 A1**

(12) **EUROPEAN PATENT APPLICATION**

(43) Date of publication:
**31.03.2004 Bulletin 2004/14**

(51) Int Cl.⁷: **G01V 1/04**, G01V 1/36,
G01V 1/38, G01V 1/02

(21) Application number: **03103527.2**

(22) Date of filing: **24.09.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **25.09.2002 GB 0222223**

(71) Applicant: **Westerngeco Seismic Holdings
Limited
Road Town, Tortola (VG)**
Designated Contracting States:
**AT IT NL**

(72) Inventors:
• **Howlid, Martin**
 **1341, Slependen (NO)**
• **Martin, James**
 **1363, H vik (NO)**
• **Synnevaag, Johan-Fredrik**
 **N-0559 Oslo (NO)**
• **Hopperstad, Jon-Fredrik**
 **N-0558 Oslo (NO)**

(74) Representative: **Suckling, Andrew Michael
Marks & Clerk,
4220 Nash Court,
Oxford Business Park South
Oxford OX4 2RU (GB)**

(54) **Marine seismic surveying**

(57) The invention provides a method of processing seismic data acquired using a seismic source array that emits, in use, a seismic wavefield having a frequency spectrum that does not contain a source ghost at a non-zero frequency within the seismic bandwidth. This eliminates source-side ghost reflections. The method further comprises processing the acquired seismic data thereby to attenuate the effect of ghost reflections in the seismic data, and this eliminates receiver-side ghost reflections.

In one embodiment, the seismic source array comprises a first source (13) located at one depth in a water column (2) and a second source (14) located at a different depth in the water column. The depths of the two sources are chosen so that their ghost notches do not overlap within the seismic bandwidth.

Figure 1

Ray paths associated with desired primary signal and associated source and receiver
ghosts. The extra propagation distance for the ghost events means they will occur later
in time with respect to the primary pulse.

EP 1 403 662 A1

# Description

The present invention relates to marine seismic surveying, and in particular to the attenuation or elimination of "ghost reflections" in marine seismic data.

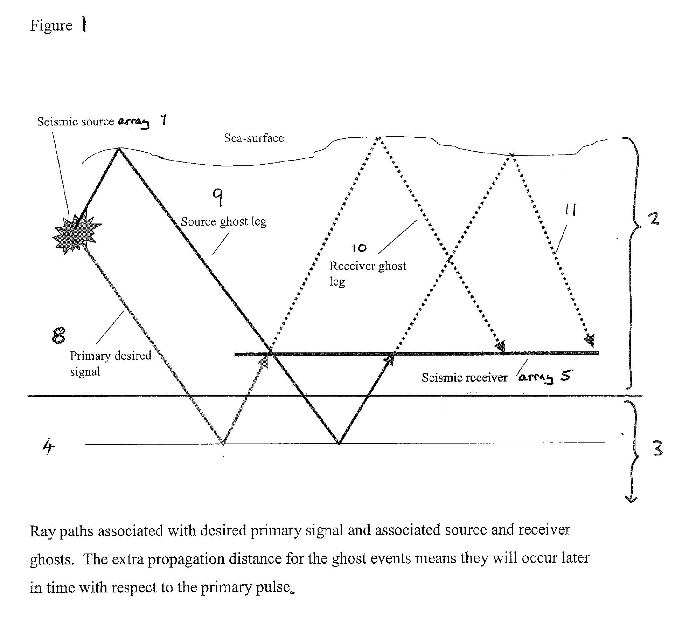

The principle of marine seismic surveying is shown schematically in Figure 1. Seismic energy is emitted in a generally downwards direction from an array 1 of one or more sources of seismic energy suspended within a water column 2 such as, for example, the sea, and passes into the earth's interior 3. Some seismic energy is reflected by geological structures 4 within the earth that act as partial reflectors of seismic energy. Features that act as partial reflectors of seismic energy generally contain an interface between two layers having different acoustic impedance to one another, such as an interface between two different types of rock or a fault. The reflected seismic energy is detected by an array of receivers 5 that are disposed within the water column 2 and that include one or more seismic sensors such as pressure sensors (hydrophones) or particle velocity sensors.

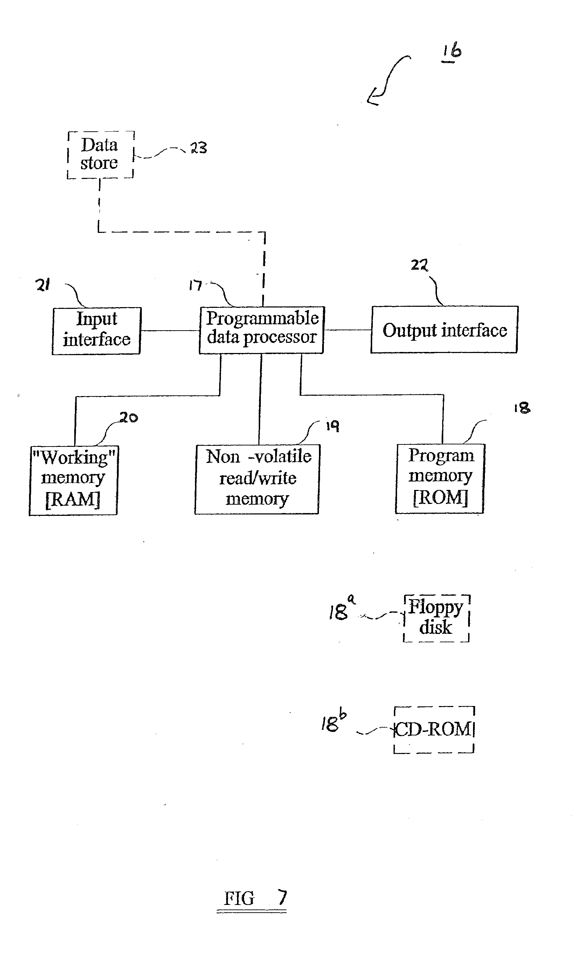

In a "towed marine survey" the receivers 5 are suspended from a float (as shown in Figure 7) so as to be disposed near the surface of the water column 2. The seismic source and the receiver array are towed through the water by one or more survey vessels (as also shown in Figure 7).

It is also known to dispose the receivers 5 on the sea-bed, for example in an "Ocean Bottom Cable" (OBC) seismic survey.

In seismic surveying, the objective is to produce an image of the earth's interior in which each acoustic impedance interface appears as a simple reflectivity series. The objective of seismic data processing is to deliver the reflectivity series to the interpreter from the seismic data acquired at the receivers.

In a seismic data trace, seismic energy reflected from a particular impedance interface feature is referred to as an "event". Ideally, the seismic signal delineating a seismic event would be a single spike, and each acoustic impedance interface would be simply identified by an associated reflectivity spike. The time at which a spike occurs, after actuation of the seismic source, is indicative of the depth within the earth of the acoustic impedance interface giving rise to that seismic reflection, and the magnitude of the spike is indicative of the degree of reflection occurring at the acoustic impedance interface.

One problem associated with conventional marine seismic surveying is that there is more than one seismic energy path from the source 1 to a receiver 5 that involves reflection at a particular impedance interface within the earth. This problem is illustrated in Figure 1. Path 8 in Figure 1 is the desired "primary path" associated with impedance interface 4 - seismic energy that follows the primary path 8 propagates downwardly from the source 1 to the impedance interface 4 where it is partially reflected, and the reflected seismic energy travels upwardly to a receiver 5.

In addition to the primary path 8, other seismic energy paths exist between the source 1 and receiver 5, and these paths involve one or more reflections at the surface of the water column. A path that involves reflection at the surface of the water column is generally referred to as a "ghost reflection".

Seismic energy that travels along the path 9 shown in Figure 1 initially propagates upwards, and undergoes reflection at the surface of the water column. The down-going seismic energy generated by reflection at the surface of the water column propagates downwards to the impedance interface 4 where it is partially reflected, and the reflected seismic energy is detected by the receiver 5. The path 9 is generally referred to as a "source ghost" path, since the reflection at the surface of the water column occurs on the source side of the path (that is, between the source and the reflection at the impedance interface 4).

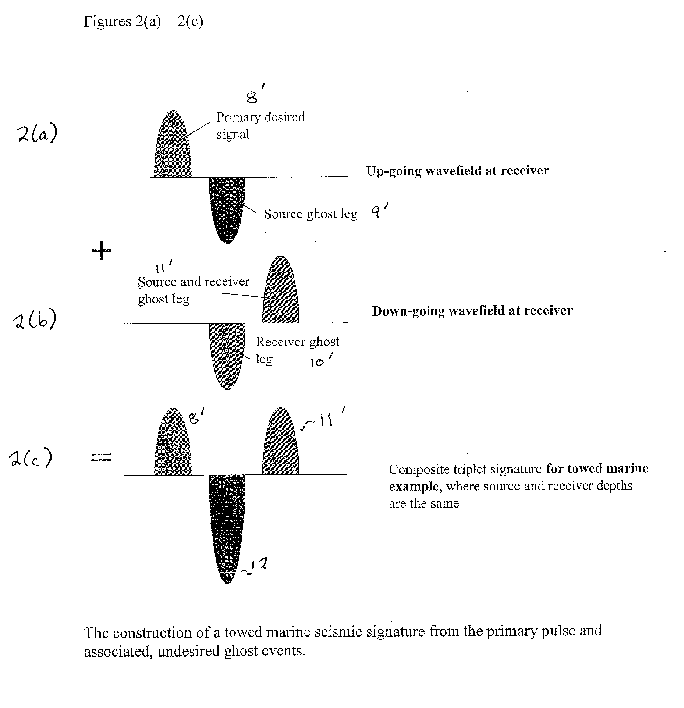

The source ghost path 9 is longer than the primary path 8, by slightly more than twice the depth of the source 1 below the surface of the water column. In consequence, seismic energy that travels along the source ghost path 9 arrives at a receiver a short time after seismic energy that has travelled along the primary path 8. This is shown in Figure 2(a), which shows the seismic energy incident on a receiver 5 as a function of time after actuation of the seismic source. The primary pulse 8' of seismic energy arise from seismic energy that has travelled along the primary path 8, and the source ghost pulse 9' arises from seismic energy that has travelled along the source ghost path 9. It should be noted that a 180° phase change occurs upon reflection at the sea-surface, so that the phase of the source ghost pulse 9' will be opposite to the phase of the primary pulse 8' as indicated in Figure 2(a).

Reflections at the surface of the water column may also occur after seismic energy has been reflected by the impedance interface 4, and these are referred to as receiver ghost reflections. Path 10 in Figure 1 includes a receiver ghost reflection - seismic energy that follows the path 10 propagates downwardly from the source 1 to the impedance interface 4 where it is partially reflected. The reflected seismic energy travels upwards to the surface of the water column, where it is reflected downwards to a receiver 5. Path 11 in Figure 1 includes both a source ghost reflection and a receiver ghost reflection - seismic energy that travels along the path 11 is twice reflected at the surface of the water column, once before reflection at the impedance interface 4, and once afterwards.

In Figure 2(b), the receiver ghost pulse 10' of seismic energy arises from seismic energy that has travelled along the receiver ghost path 10, and the source-receiver ghost pulse 11' arises from seismic energy that has travelled along the path 11. Since the path 11 involves two reflection at the surface of the water column, the phase of the source-receiver ghost pulse 11' is the same as the phase of the primary pulse 8. The path 10 involves only a single reflection at the surface of the water column, so that the phase of the receiver ghost pulse 10' is opposite to the phase of the primary pulse 8'.

(It will be noted that the paths 8, 9, 10 and 11 shown in Figure 1 are incident on different receiver positions. For any particular receiver position, however, there will be seismic energy paths having the same general form as paths 8, 9, 10 and 11 that terminate at that receiver position. The reflection points on the geological structure 4 associated with each of these paths will be close to one another.)

It should be noted that seismic energy that travels along the primary path 8 or the source ghost path 9 is propagating upwardly when it is incident on the receiver. Figure 2(a) shows the up-going component of the seismic wavefield at the receiver, since the pulses 8',9' shown in Figure 2(a) are both pulses that are propagating upwardly at the receiver. Seismic energy that travels along the receiver ghost path 10 or the source-receiver ghost path 11 is, on the other hand, propagating downwardly when it is incident on the receiver. Figure 2(b) shows the down-going component of the seismic wavefield at the receiver, since the pulses 10',11' shown in Figure 2(b) are both pulses that are propagating upwardly at the receiver.

The total seismic energy incident on the receiver is shown in Figure 2(c), and is the sum of the up-going seismic energy shown in Figure 2(a) and the down-going seismic energy shown in Figure 2(b). Figure 2(c) shows the total seismic energy for a case where the depth of the source is approximately equal to the depth of the receiver, so that the arrival time at the receiver of the source ghost pulse 9' will be approximately the same as the arrival time of the receiver ghost pulse 10'. In this case, the seismic energy received at the receiver will, as shown in Figure 2(c), consist of the desired primary pulse 8', followed by a pulse 12 of opposite phase (corresponding to the sum of the source ghost pulse 9' and the receiver ghost pulse 10'), in turn followed by the source-receiver ghost pulse 11'. The seismic event thus appears as three pulses, not as a single spike. The presence of the ghost pulses complicates analysis of the seismic data.

A towed marine seismic survey will often have an acquired seismic energy signature similar to that of Figure 2(c). Source and receiver ghost events distort the signature from the ideal single spike into a triplet. A triplet results because the seismic source and the towed streamer of receivers are often towed at the same shallow depth, for example 5-7m. The ghost parts of the triplet are also very variable in character, as they rely on reflections from the air/water interface, which is dynamic. The triplet event has a longer duration than the desired single spike, so that the ghost parts of the triplet may mask weaker neighbouring events.

The time delays between the desired primary pulse and the undesired ghost pulses of a signature are dependent on the relative ghost time delays, and this is governed by the depths of the seismic source and receivers. For sea-floor recording, the source is usually towed at a depth of approximately 5-7m depth while the receiver is at the sea-floor. A more complicated signature than the triplet of Figure 2(c) would result in this case, since there would be a significant time delay between the receiver ghost pulses 10', 11' and the primary pulse 8' and the source ghost pulse 9'.

A further problem associated with ghost reflections is that the source-side ghost reflections leads to "notches" in the frequency spectrum of seismic energy emitted by a seismic source. This is because the far-field signal produced by the source is the sum of the direct signal from the source (otherwise known as the "source output") and the ghost signal reflected from the sea surface. The signal reflected from the sea surface is delayed relative to the direct signal, and there are two components to this delay: firstly, there is the 180° phase change upon reflection at the sea surface and, secondly, there is a time delay corresponding to the additional path length. The additional path length is twice the depth of the vibrator for a signal emitted in the vertical direction (and is greater for a signal emitted in a non-vertical direction).

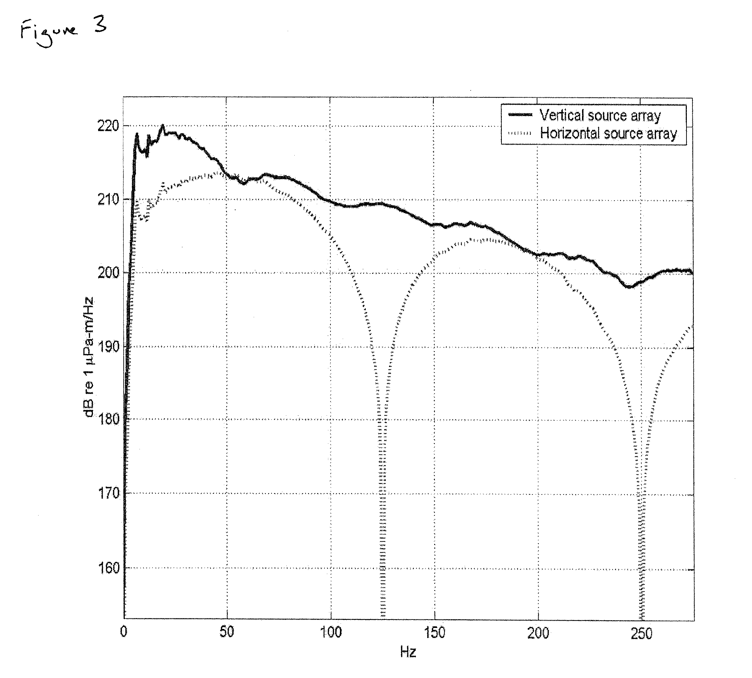

The direct signal and the ghost signal will interfere, and this causes variations in the amplitude of the far field signal. For some frequencies, the interference is destructive and causes a minimum amplitude (possibly a zero amplitude) or "ghost notch" in the spectrum. For energy emitted in the vertical direction, this occurs at frequencies where the depth of the source is an even number of quarter wavelengths. Constructive interference occurs at frequencies exactly intermediate adjacent ghost notch frequencies, and this leads to maxima in the amplitude at these frequencies. The existence of ghost notches in the frequency spectrum is illustrated in Figure 3. The broken line in Figure 3 shows the frequency spectrum of seismic energy emitted by a seismic source disposed within the water column, and it will be seen that ghost notches occur at approximately 90Hz and 180Hz (there is also a notch at 0Hz). Maxima occur between the ghost notches in the frequency spectrum.

The presence of maxima and minima in the far-field signal is undesirable. A further undesirable effect is the gradual roll-off that occurs near a ghost notch frequency, and in particular near the zero-frequency end of the spectrum (a frequency of 0Hz is always a ghost notch frequency for a single seismic source disposed below the surface of a water column).

A first aspect of the present invention provides a method of processing seismic data acquired using a seismic source array that emits, in use, a seismic wavefield having a frequency spectrum within the seismic bandwidth that does not contain a source ghost notch at a non-zero frequency, the method comprising processing the acquired seismic data thereby to attenuate the effect of ghost reflections in the seismic data.

The present invention enables ghost reflections to be attenuated or completely eliminated from the acquired seismic data. Source-side ghost reflections are attenuated through use of a seismic source array that has a frequency spectrum having no source ghost notches at non-zero frequencies within the seismic bandwidth, and receiver-side ghost reflections may be attenuated through appropriate processing of the acquired data.

The term "seismic bandwidth" denotes the frequency range of interest in a particular seismic survey. It is immaterial whether source ghost notches occur at frequencies outside the seismic bandwidth, since data at frequencies outside the seismic bandwidth are discarded or are simply not acquired, and it is sufficient to ensure that no source ghost notches occur at a non-zero frequency that is lower than the maximum frequency of the seismic bandwidth. The seismic bandwidth for a typical seismic surveys generally extends from a minimum frequency of, or close to, 0Hz to a maximum frequency that is no higher than 100Hz, although in some surveys the seismic bandwidth may extend to a maximum frequency that is above 100Hz. In virtually all surveys, ensuring that the frequency spectrum of the source array has no source ghost notches at a non-zero frequency in the frequency range up to 500Hz, for a take-off angle of up to 45°, will ensure that no source ghost notches occur in the seismic bandwidth. (Of course, if in a particular survey, the seismic bandwidth extends up to a maximum frequency of, for example, 100Hz, it will be sufficient if the frequency spectrum of the source array has no source ghost notches at a non-zero frequency in the frequency range up to 100Hz.)

The invention further provides a method of acquiring seismic data comprising the steps of: a) actuating a seismic source array to emit seismic energy having a frequency spectrum that does not contain a notch at a non-zero frequency; b) acquiring seismic data at a seismic receiver; and c) processing the acquired seismic data according to a method as defined above.

The invention further provides a method of acquiring seismic data comprising the steps of: a) actuating a seismic source array to emit seismic energy having a frequency spectrum that does not contain a notch at a non-zero frequency; b) acquiring seismic data at a seismic receiver; and c) processing the acquired seismic data thereby to attenuate the effect of ghost reflections in the seismic data.

The invention further provides an apparatus for processing seismic data acquired using a seismic source array that emits, in use, a seismic wavefield having a frequency spectrum that does not contain a notch at a non-zero frequency, the apparatus comprising means for processing acquired seismic data thereby to attenuate the effect of ghost reflections in the seismic data. The apparatus may comprise a programmable data processor.

The invention further provides a seismic surveying arrangement comprising: a seismic source array that emits, in use, a seismic wavefield having a frequency spectrum that does not contain a notch at a non-zero frequency; one or more seismic receivers for acquiring seismic data; and an apparatus as defined above for processing seismic data acquired at the one or more receivers.

The invention further provides a storage medium comprising a program for a data processor of an apparatus as defined above, and a storage medium containing a program for controlling a data processor to perform a method as defined above.

Preferred features of the invention are set out in the dependent claims.

Preferred embodiments of the present invention will now be described by way of illustrative example with reference to the accompanying figures, in which;

Figure 1 is a schematic illustration of a towed marine seismic survey indicating possible paths of seismic energy;

Figure 2(a) and figure 2(b) show the up-going wavefield and down-going wavefield, respectively, acquired at a receiver in the seismic survey of figure 1;

Figure 2(c) is the sum of the up-going wavefield of figure 2(a) and the down-going wavefield of figure 2(b);

Figure 3 shows the frequency spectrum of a conventional seismic source array and the frequency spectrum of a notchless vertical array as used in the present invention;

Figure 4(a) and figure 4(b) show the directivity of a conventional seismic source array and a notchless vertical source array, respectively;

Figure 5(a) shows acquired seismic data that contain ghost reflections;

Figure 5(b) shows the seismic data of figure 5(a) after attenuation of receiver-side ghost reflections;

Figure 5(c) illustrates the wavefield separation technique used to attenuate receiver-side ghost reflections in the data of Figure 5(a);

Figure 6 is a schematic illustration of a notchless vertical source array;

Figure 7 is a block schematic diagram of an apparatus according to the present invention.

The present invention is directed to attenuation of both source-side ghost reflections and receiver-side ghost reflections. The invention combines source solutions and receiver solutions such that the notches in the final data introduced by the ghost events are either attenuated or are completely eliminated. The elimination or attenuation of ghost reflections from the seismic data provides a clearer image of the sub-surface and eliminates the risk that ghost reflections associated with a strong event will obscure a neighbouring weaker event. In the invention, the source-side ghost reflections are eliminated by using a source array that emits a seismic energy having a frequency spectrum that does not contain source ghost notches at non-zero frequencies within the seismic bandwidth. As noted above, the term "seismic bandwidth" denotes the frequency range of interest in a particular seismic survey. The seismic bandwidth for a typical seismic surveys generally extends up to a maximum frequency that is no higher than 100Hz, although in some surveys the seismic bandwidth may extend to a maximum frequency of around 500Hz. In virtually all surveys, ensuring that the frequency spectrum of the source array has no source ghost notches at a non-zero frequency in the frequency range up to 500Hz, for a take-off angle of up to 45°, will ensure that no source ghost notches occur in the seismic bandwidth.

The frequency spectrum of a source array suitable for use in the present invention is shown in figure 3, as a full line. If this is compared with the frequency spectrum of a conventional source shown as the broken line in figure 3, it will be seen that the notches at 90Hz and 180Hz in the conventional frequency spectrum have been eliminated. It will be noted, however, that the notch at 0Hz is still present.

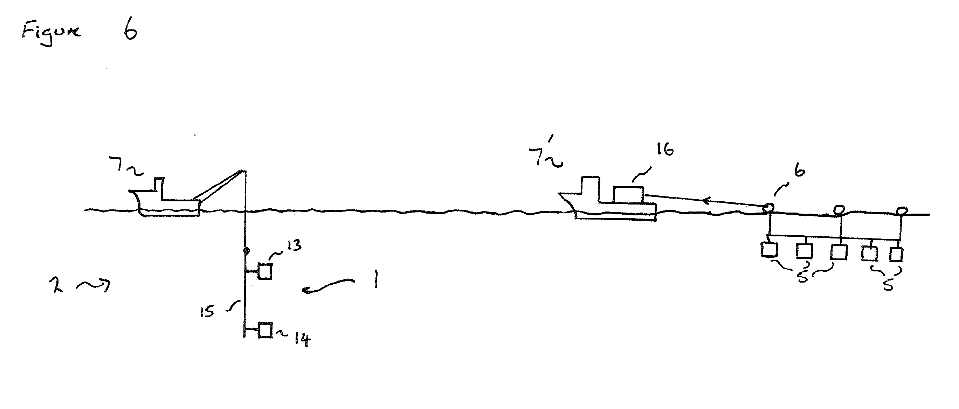

One suitable source array is illustrated in figure 6. This is a vertical source array, that comprises a plurality of acoustic sources mounted at different heights. Figure 6 shows a source array 1 consisting of two acoustic sources 13,14 disposed at a different positions on a support frame 15 that maintains the position and orientation of one source 13 fixed relative to the position and orientation of the other source 14. When the source array of figure 6 is used in a towed marine seismic survey, the support frame is oriented such that the two sources will be at different depths below the sea surface. As a result, the travel time of seismic energy from the upper source 13 to the sea surface will be less than the travel time of seismic energy from the lower source 14 to the sea surface.

Although Figure 6 shows a source array having two sources the invention is not limited to this. The source array may contain sources at three or more different heights and in principle more than one source may be provided at a given height.

The actual far field signal produced by a single seismic source, which may be, for example, an airgun, a watergun or a marine vibrator, is the sum of the direct signal and the ghost signal. For simplicity, consider the far field signal at a point vertically below the source so that the additional path length of the ghost reflection is simply equal to twice the depth (z) of the source. Destructive interference between the ghost signal and the direct signal, leading to a notch in the frequency spectrum, occurs at frequencies where the depth of the source is an even number of quarter wavelengths;

$$f_{notch} = (nc/2z), \text{ where } n = 0,1,2,3... \qquad (1)$$

In equation (1), c is the speed of sound in water, and n is a natural number giving the harmonic order.

Constructive interference occurs at frequencies exactly intermediate notch frequencies, leading to maxima in the amplitude of the frequency spectrum at these frequencies which are given by;

$$f_{peak} = (2n+1)\, c/4z, \ n = 0,1,2,3... \qquad (2)$$

The overall far-field signal produced by the vertical source array shown in figure 6, will be the sum of the individual far field signals produced by each individual source. Since the sources are at different depths, the individual far field signal produced by each source will have ghost notches at frequencies that depend on the depth of the respective source. The overall far field signal produced by the source array will therefore generally not have ghost notches at non-zero frequencies, since a ghost notch frequency in the spectrum of one source will be compensated for by a non-zero amplitude at that frequency in the spectrum of the other source.

As an example, if the depth of the upper source 13 and the separation between the two sources are arranged so that the depth below the sea surface of the second source 14 is exactly twice the depth of the first source, a peak frequency for the upper source will be coincident with, and will compensate for, a ghost notch frequency in the spectrum of the lower source. Similarly, a ghost notch frequency in the notch spectrum of the upper source will be compensated by a non-zero amplitude in the spectrum of the lower source.

It should be noted that the frequency spectrum of each source will have a ghost notch frequency at 0Hz, so that the overall far field signal of the source array will also contain a ghost notch frequency at 0Hz.

It should be noted that the overall far-field signal will contain a source ghost notch at a frequency at which a ghost notch occurs in the frequency spectrum of each source (in the simple example given above, where one source is at twice the depth of the other source, the second ghost notch frequency of the deeper source is equal to the first ghost notch frequency of the lower source). The sources should therefore be arranged such that their source ghost notch frequencies do not overlap within the seismic bandwidth (except for the source ghost notches at zero frequency, which will always overlap). That is, if the seismic bandwidth extends to an upper limit of X Hz (where X is typically around 100, but may be as large as 300 or even around 500), the sources should be arranged such that their source ghost notch frequencies do not overlap at a non-zero frequency below X Hz.

It should also be noted that the overall wavefield of a source array may contain notches arising from the geometry of the array. The array geometry is preferably chosen so that notches arising from the geometry of the array do not occur within the seismic bandwidth.

It should be noted that arranging the seismic sources in a vertical array as shown in figure 6, does not change the overall energy that is emitted by the source array. The energy has however, been redistributed within the frequency spectrum of the overall signal, so as to attenuate ghost notches in the frequency spectrum.

Figure 6 shows the vertical seismic source array 1 in use in a marine seismic surveying arrangement. The source array is deployed from a survey vessel 7 such that the sources 13,14 are at their desired depths below the surface of a water column 2.

The seismic surveying arrangement of Figure 6 further includes an array of one or more seismic receivers 5. Five receivers are shown in Figure 6, but fewer or more than five receivers could be used. The receivers 5 are suspended from floats 6, at a depth of few metres below the surface of the water column 2, and are towed by a second survey vessel 7'. Data acquired at the receivers 5 is transmitted to a processing apparatus 16 located on the second survey vessel, for example along an electrical or optical link, as indicated schematically by the arrow in Figure 6. The processing apparatus processes the acquired seismic data so as to attenuate pulses in the data that arise from ghost reflections, as will be discussed further below.

Although Figure 6 shows the processing apparatus be located on one of the survey vessels, the intention is not limited to this. For example, the data may be stored on a survey vessel for subsequent processing at a processing apparatus located on land.

Introducing a vertical separation between seismic sources in an array has the effect of introducing a phase shift between the energy emitted by the upper source 13 and the energy emitted by the lower source 14. In order to prevent such a phase shift occurring, in a preferred embodiment of the invention the start time of the sweep of a deeper seismic source is delayed compared to the start time of the sweep of a shallower seismic source. For example, the seismic surveying arrangement may contain actuating means (not shown) for actuating the sources of the source array such that there is a time delay between actuation of the upper source 13 and the lower source 14 (with the upper source being actuated before the lower source). When actuating the source array 1 shown in figure 6, the time delay between actuation of the upper source 13 and the actuation of the lower source 14 would be preferably substantially equal to the time taken for seismic energy emitted by the upper seismic source 13 to reach the lower seismic source 14, so that the phase shift between energy emitted by the upper source and energy emitted by the lower source is thus eliminated.

As noted above, one type of seismic source used in marine seismic surveying is the marine vibrator. When a marine vibrator is actuated, it emits seismic energy over a finite sweep time. In the case of a vertical array of marine vibrators, the start of the sweep of the lower vibrator would be delayed so that the lower vibrator began its sweep at the same time as energy emitted by the shallower marine vibrator at the start of its sweep reached the deeper vibrator.

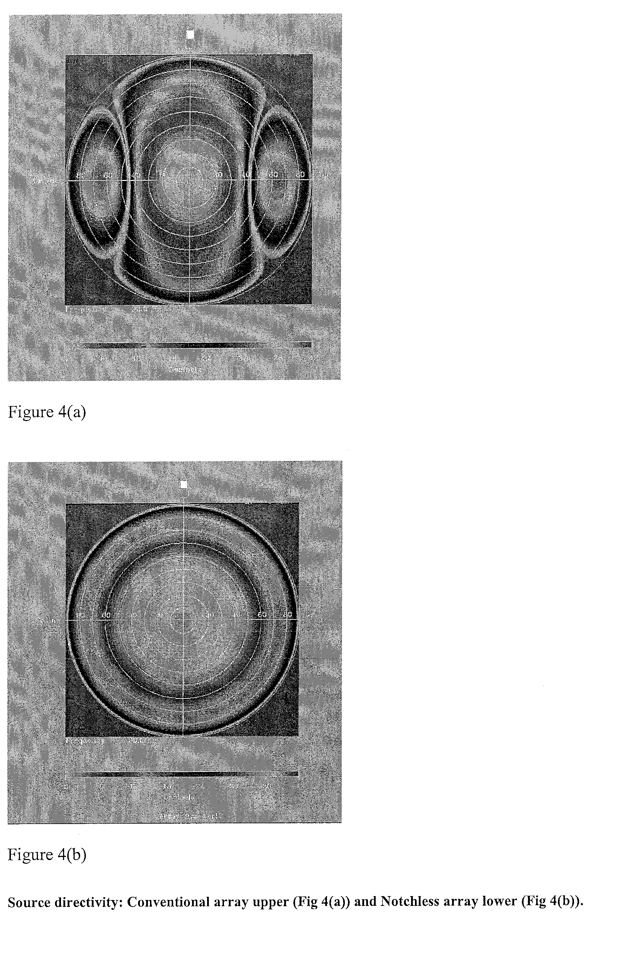

Mounting seismic sources in a vertical array as shown in figure 6 has a further advantage, in that it reduces the directivity of the array. Figure 4(a) shows the amplitude of seismic energy emitted in a vertical plane by a conventional seismic array. It will be seen that the angular distribution of the emitted energy is not isotropic, but instead has a single reflection symmetry. The directionality of the energy emitted by the array arises primarily from the horizontal extent of a conventional source array.

Figure 4(b) shows the amplitude of energy emitted in a vertical plane by a vertical source array of the type shown in figure 6. It will be seen that the angular distribution of the emitted energy is substantially isotropic, and this is primarily a result of the small horizontal extent of the vertical source array.

It should be noted that removing source ghost notches in the frequency spectrum of the source array does not, on its own, necessarily improve the angular distribution of the wavefield emitted by the source array. A source array that includes two horizontal arrays of sources, disposed at different depths from one another, would generate a source wavefield that did not include ghost notches at non-zero frequencies, but such an array would not emit an azimuthally symmetric wavefield pattern.

The source array shown in figure 6 is one source array that will generate an overall source wavefield that does not have source ghost notches at a non-zero frequency within the seismic bandwidth. The invention is not, however, limited to a seismic surveying arrangement including source arrays of the particular type shown in figure 6, but may be applied with any source array that generates a source wavefield that does not have source ghost notches at non-zero frequencies within the seismic bandwidth. For example, a source array in which the or each source was disposed, in use, at the surface of a water column would generate a wavefield that did not contain source ghost notches. Indeed, the wavefield emitted by such a source array would not have a source ghost notch at 0Hz (provided, of course, that the frequency spectrum of the wavefield emitted by the or each source had a non-zero amplitude as the frequency tended to 0Hz).

As explained above, the source ghost events arise from seismic energy that propagates upwards from the source and is reflected at the surface of the water column. Another way of suppressing source ghost events is therefore to provide an absorber (not shown in Figure 6) above the source to absorb seismic energy that is emitted in an upwards direction. A source array that had such an absorber would generate a wavefield that did not contain source ghost notches in the frequency spectrum - since the absorber would absorb up-going seismic energy and so prevent the formation of ghost reflections (for the ideal case in which the absorber absorbs all up-going seismic energy emitted by the source).

Examples of a suitable absorber include an absorbing screen that is disposed above the source - in the case of a towed marine seismic source, the absorber would be disposed above the source and would be towed with the source so as to maintain a constant position relative to the source. The screen would be made of a material that absorbs seismic energy, and thus absorbs up-going seismic energy from the source and prevents it from reaching the surface of the water column.

Alternatively, an absorber may consist of a screen of air bubbles located above the source. A screen of bubbles, such as air bubbles, would provide an absorbing and scattering boundary, and would again absorb upwardly emitted seismic energy and prevent it from reaching the surface of the water column. The bubble screen could be generated by a suitable bubble source (not shown) located on or close to the seismic source.

A seismic source provided with such an absorber against provides a wavefield having a frequency spectrum that does not include a notch at 0Hz (again assuming that the source itself emits a wavefield with a frequency spectrum that is non-zero as the frequency tends to 0Hz).

Another way of suppressing source ghost events is to provide means for inducing positive reflection of seismic energy that is emitted in an upwards direction. By "positive reflection" is meant that the phase of the seismic energy does not change on reflection. A screen of bubbles, such as air bubbles, located above the source can induce positive reflection of seismic energy emitted in an upwards direction, and thereby prevent the occurrence of a source ghost notch.

Use of a "notchless" source array - that is, a source array that produces a wavefield having a frequency spectrum that does not have notches at non-zero frequencies within the seismic bandwidth - is effective at attenuating source-side ghost reflections. Thus, when a "notchless" source array is used the source-side ghost pulse 9' of Figure 2(a) should be eliminated. It is still, however, necessary to attenuate the effects of receiver-side reflections in the acquired seismic data.

As described above with reference to figure 2 (a) to 2(c), seismic energy paths that involve a receiver-side ghost reflection lead to a wavefield that is travelling downwards at a receiver. The desired primary path, however, produces a pulse that is travelling upwards at the receiver. The effect of the receiver-side ghost reflections may therefore be eliminated from the acquired seismic wavefield by separating the acquired wavefield into its up-going and down-going opponents. The up-going wavefield constituent will contain the desired primary signal.

There are a number of known schemes for decomposing an acquired seismic wavefield into its up-going and down-going constituents. Any suitable one of these known techniques may be applied in the method of the present invention. For example, many seismic surveys today use multi-component seismic receivers which acquire more than one component of the wavefield incident on the receiver. In a 4C survey, for example, a seismic receiver contains a pressure sensor and sensors for measuring three orthogonal components of the particle motion (such as the x-, y- and z-components of the particle velocity). There are known methods for decomposing multi-component seismic data into up-going and down-going constituents. In one known technique, the pressure wavefield may be combined with either the vertical component of particle velocity or the vertical component of the pressure gradient to produce an operator that separates the acquired wavefield into up-going and down-going constituents. This method may be applied to seismic data acquired in a sea-floor seismic survey, or in a towed marine seismic survey.

Methods for attenuating the receiver-side ghost reflections are known that involve the use of receivers at two or more different depths. In a towed marine seismic survey, for example, the receivers may be arranged in two arrays, one array below the other. The effects of receiver-side ghost reflections in the acquired data may be attenuated by suitably combining data from the two arrays.

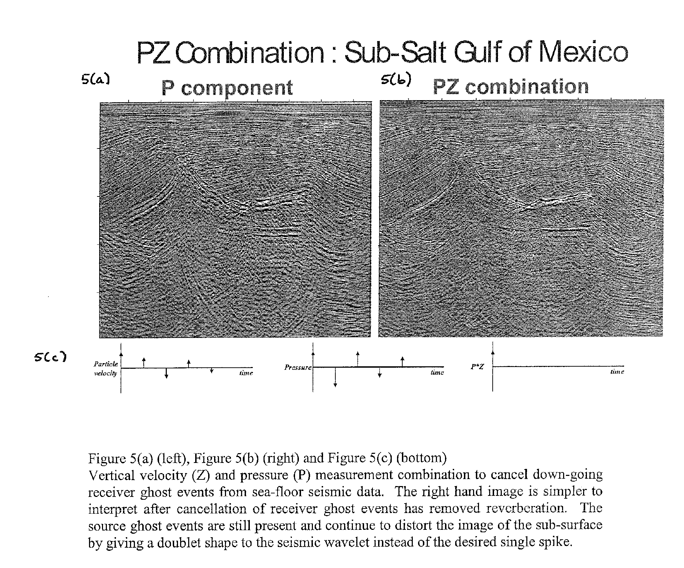

Figure 5(a) illustrates seismic data acquired in a conventional marine seismic survey. This contains both source-side and receiver-side ghost reflections.

Figure 5(b) shows the effect of attenuating receiver-side ghost reflections in the data of figure 5(a). Receiver-side ghost reflections are attenuated by separating the wavefield into its up-going and down-going constituents, by combining pressure measurements and vertical particle velocity measurements. As indicated schematically in Figure 5(c), the wavefield separation was carried out using a operator that includes the product of the measured pressure wavefield with the vertical component of the measured particle velocity - the left hand frame of Figure 5(c) represents the vertical component of the measured particle velocity, the central frame of Figure 5(c) represents the pressure, and the right hand frame of Figure 5(c) represents the product of the pressure (P) and the vertical component (Z) of the measured particle velocity.

Figure 5(b) shows the up-going constituent of the wavefield of Figure 5(a) obtained by the wavefield separation, and so does not include receiver-side ghost reflections. It will be seen that attenuation of receiver-side ghost reflections makes the image simpler to interpret. It should be noted, however, that source-side ghost reflections are still present and these continue to distort the image of the sub-surface by giving a doublet shape to the seismic wavelet produced by reflection at an impedance boundary instead of the desired single spike.

The method of the invention is particularly suitable for illumination of complex structures and structures requiring high resolution data.

The invention produces ghost-free seismic data in which the ghost events have been attenuated or cancelled. The data are therefore not prone to errors introduced by the dynamically changing shape of the sea-surface (which will cause variations in the effects of ghost reflections). A further advantage is that the dynamic range of ghost-free seismic data is improved, so that data obtained by the method of the invention are ideal for time-lapse reservoir monitoring.

Ghost-free seismic data recording can also be used to improve the accuracy first-break picking schemes, in which the first seismic arrival at a receiver is used to determine the location of the receivers on the sea-floor, or in a borehole. The accuracy of position determination is improved, because of the simplified seismic wavelet.

The techniques for obtaining ghost-free seismic data can also be applied to high frequency acoustic positioning methods, where the simplified waveforms would also be of benefit.

The invention may be applied to newly-acquired seismic data. It may also be applied to pre-existing seismic data that were acquired using a notchless source array.

Figure 7 is a schematic block diagram of an apparatus 16 that is able to perform a method according to the present invention.

The apparatus 16 comprises a programmable data processor 17 with a program memory 18, for instance in the form of a read only memory (ROM), storing a program for controlling the data processor 17 to process seismic data by a method of the invention. The apparatus further comprises non-volatile read/write memory 19 for storing, for example, any data which must be retained in the absence of a power supply. A "working" or "scratch pad 20. An input device 21 is provided, for instance for receiving user commands and data. One or more output devices 22 are provided, for instance, for displaying information relating to the progress and result of the processing. The output device(s) may be, for example, a printer, a visual display unit, or an output memory.

Sets of seismic data for processing may be supplied via the input device 21 or may optionally be provided by a machine-readable data store 23.

The results of the processing may be output via the output device 22 or may be stored.

The program for operating the system and for performing the method described hereinbefore is stored in the program memory 18, which may be embodied as a semiconductor memory, for instance of the well known ROM type. However, the program may well be stored in any other suitable storage medium, such as a magnetic data carrier 18a (such as a "floppy disk") or a CD-ROM 18b.

## Claims

1. A method of processing seismic data acquired using a seismic source array that emits, in use, a seismic wavefield having a frequency spectrum within the seismic bandwidth that does not contain a source ghost at a non-zero frequency, the method comprising processing the acquired seismic data thereby to attenuate the effect of ghost reflections in the seismic data.

2. A method as claimed in claim 1 wherein the seismic source array emits, in use, a seismic wavefield having a frequency spectrum that does not contain a source ghost at a non-zero frequency in the frequency range up to 500Hz, for a take-off angle of up to 45°.

3. A method as claimed in claim 1 or 2 and comprising processing the acquired seismic data to attenuate the effects of receiver-side ghost reflections.

4. A method as claimed in claim 1, 2 or 3 wherein the processing step comprises separating the acquired seismic data into an up-going constituent and a down-going constituent.

5. A method of acquiring seismic data comprising the steps of:

   a) actuating a seismic source array to emit seismic energy having a frequency spectrum that does not contain a source ghost notch at a non-zero frequency within the seismic bandwidth;
   b) acquiring seismic data at a seismic receiver; and
   c) processing the acquired seismic data according to a method defined in claim 1, 2, 3 or 4 thereby to attenuate the effect of ghost reflections.

6. A method of acquiring seismic data comprising the steps of:

   a) actuating a seismic source array to emit seismic energy having a frequency spectrum that does not contain a source ghost notch at a non-zero frequency within the seismic bandwidth;
b) acquiring seismic data at a seismic receiver; and
c) processing the acquired seismic data thereby to attenuate the effect of ghost reflections.

7. A method as claimed in claim 5 or 6 wherein the source array comprises a first seismic source and a second seismic source disposed, in use, below the first seismic source.

8. A method as claimed in the claim 7 wherein the second seismic source is disposed, in use, vertically below the first seismic source.

9. A method as claimed in claim 7 or 8 wherein step (a) comprising actuating the second source a pre-determined time after actuating the first source.

10. A method as claimed in claim 9 wherein the pre-determined time is substantially equal to the travel time of seismic energy from the first seismic source to the second seismic source.

11. A method as claimed in claim 5 or 6 wherein the or each seismic source in the source array is disposed substantially at the surface of a water column.

12. A method as claimed in claim 5 or 6 wherein the source array comprises means for absorbing upwardly-emitted seismic energy.

13. A method as claimed in claim 5 or 6 wherein the source array comprises means for inducing positive reflection of upwardly-emitted seismic energy.

14. An apparatus for processing seismic data acquired using a seismic source array that emits, in use, a seismic wavefield having a frequency spectrum that does not contain a notch at a non-zero frequency, the apparatus comprising means for processing acquired seismic data thereby to attenuate the effect of ghost reflections in the seismic data.

15. An apparatus as claimed in claim 14 and adapted to process acquired seismic data to attenuate the effects of receiver-side ghost reflections.

16. An apparatus as claimed in claim 14 or 15 and adapted to separate acquired seismic data into an up-going constituent and a down-going constituent.

17. An apparatus as claimed in claim 14, 15 or 16 and comprising a programmable data processor.

18. A seismic surveying arrangement comprising:

a seismic source array that emits, in use, a seismic wavefield having a frequency spectrum that does not contain a notch at a non-zero frequency;
one or more seismic receivers for acquiring seismic data; and
an apparatus as defined in claim 14, 15 or 16 for processing seismic data acquired at the one or more receivers.

19. A seismic surveying arrangement as claimed in claim 18 wherein the source array comprises a first seismic source and a second seismic source disposed, in use, below the first seismic source.

20. A seismic surveying arrangement as claimed in claim 19 wherein the second seismic source is disposed, in use, vertically below the first seismic source.

21. A seismic surveying arrangement as claimed in claim 19 or 20 and further comprising means for actuating the second source a pre-determined time after actuating the first source.

22. A seismic surveying arrangement as claimed in claim 21 wherein the pre-determined time is substantially equal to the travel time of seismic energy from the first seismic source to the second seismic source.

23. A seismic surveying arrangement as claimed in claim 18 wherein the or each seismic source in the source array is disposed, in use, substantially at the surface of a water column.

24. A seismic surveying arrangement as claimed in claim 18 wherein the source array comprises means for absorbing upwardly-emitted seismic energy.

25. A seismic surveying arrangement as claimed in claim 18 wherein the source array comprises means for inducing positive reflection of upwardly-emitted seismic energy.

26. A storage medium comprising a program for a data processor of an apparatus as defined in claim 17.

27. A storage medium containing a program for controlling a data processor to perform a method as defined in any of claims 1 to 4.

Figure 1

Seismic source array 1

Sea-surface

9
Source ghost leg

10
Receiver ghost leg

11

2

8
Primary desired signal

Seismic receiver array 5

4

3

Ray paths associated with desired primary signal and associated source and receiver ghosts. The extra propagation distance for the ghost events means they will occur later in time with respect to the primary pulse.

Figures 2(a) – 2(c)

2(a)

8′
Primary desired
signal

**Up-going wavefield at receiver**

Source ghost leg  9′

+

2(b)

11′
Source and receiver
ghost leg

**Down-going wavefield at receiver**

Receiver ghost
leg  10′

2(c)  =

8′  ~11′

Composite triplet signature **for towed marine
example**, where source and receiver depths
are the same

~12

The construction of a towed marine seismic signature from the primary pulse and
associated, undesired ghost events.

Figure 3

EP 1 403 662 A1

Figure 4(a)

Figure 4(b)

**Source directivity: Conventional array upper (Fig 4(a)) and Notchless array lower (Fig 4(b)).**

## PZ Combination : Sub-Salt Gulf of Mexico

5(a) **P component**  5(b) **PZ combination**

5(c)

Figure 5(a) (left), Figure 5(b) (right) and Figure 5(c) (bottom)
Vertical velocity (Z) and pressure (P) measurement combination to cancel down-going receiver ghost events from sea-floor seismic data. The right hand image is simpler to interpret after cancellation of receiver ghost events has removed reverberation. The source ghost events are still present and continue to distort the image of the sub-surface by giving a doublet shape to the seismic wavelet instead of the desired single spike.

Figure 6

16

Data
store — 23

21                17·              22

Input                Programmable              Output interface
interface            data processor

20              19              18

"Working"            Non -volatile            Program
memory               read/write               memory
[RAM]                memory                   [ROM]

18ᵃ ⸺ Floppy
disk

18ᵇ ⸺ CD-ROM

FIG   7

**European Patent Office**

## EUROPEAN SEARCH REPORT

Application Number

EP 03 10 3527

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 4 441 174 A (MOORE NEIL A ET AL) 3 April 1984 (1984-04-03) * column 6, line 14-31 * * figures 1-4 * | 1-9,11, 14-21,23 | G01V1/04 G01V1/36 G01V1/38 G01V1/02 |
| Y | WO 02 01254 A (SCHLUMBERGER CA LTD ;SCHLUMBERGER SERVICES PETROL (FR); GECO AS (N) 3 January 2002 (2002-01-03) * page 2, line 7-12; figure 1 * | 1-9,11, 14-21,23 | |
| A | GB 2 183 834 A (DECCA LTD) 10 June 1987 (1987-06-10) * page 1, line 117 - page 2, line 19 * * figures 3-7 * | 5-25 | |
| A | US 4 712 198 A (FAIL JEAN-PIERRE) 8 December 1987 (1987-12-08) * column 4, line 24-63 * * figures 1-7 * | 5-25 | |
| A | US 6 151 275 A (STARR JOEL) 21 November 2000 (2000-11-21) * column 6, line 62 - column 7, line 41 * * figures 1,1-4,10,11 * | 1-4 | TECHNICAL FIELDS SEARCHED (Int.Cl.7) G01V |
| A | GB 2 176 605 A (EXXON PRODUCTION RESEARCH CO) 31 December 1986 (1986-12-31) * page 4, line 58-65 * * figure 3 * | 1-4 | |

The present search report has been drawn up for all claims

| Place of search | Date of completion of the search | Examiner |
|---|---|---|
| THE HAGUE | 22 January 2004 | Modesto, C |

EPO FORM 1503 03.82 (P04C01)

## ANNEX TO THE EUROPEAN SEARCH REPORT
## ON EUROPEAN PATENT APPLICATION NO.

EP 03 10 3527

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2004

| Patent document cited in search report | | Publication date | Patent family member(s) | | Publication date |
|---|---|---|---|---|---|
| US 4441174 | A | 03-04-1984 | US | 4493061 A | 08-01-1985 |
| | | | US | RE32683 E | 31-05-1988 |
| WO 0201254 | A | 03-01-2002 | AU | 7441101 A | 08-01-2002 |
| | | | GB | 2379981 A | 26-03-2003 |
| | | | WO | 0201254 A1 | 03-01-2002 |
| | | | NO | 20026225 A | 28-02-2003 |
| | | | US | 2003147306 A1 | 07-08-2003 |
| GB 2183834 | A | 10-06-1987 | NONE | | |
| US 4712198 | A | 08-12-1987 | FR | 2566135 A1 | 20-12-1985 |
| | | | CA | 1248215 A1 | 03-01-1989 |
| | | | DE | 3575791 D1 | 08-03-1990 |
| | | | EP | 0167438 A1 | 08-01-1986 |
| | | | JP | 1882831 C | 10-11-1994 |
| | | | JP | 6005298 B | 19-01-1994 |
| | | | JP | 61075285 A | 17-04-1986 |
| | | | NO | 852419 A | 19-12-1985 |
| US 6151275 | A | 21-11-2000 | AU | 760176 B2 | 08-05-2003 |
| | | | AU | 5685999 A | 03-04-2000 |
| | | | CA | 2339265 A1 | 23-03-2000 |
| | | | CN | 1317096 T | 10-10-2001 |
| | | | EG | 22112 A | 30-08-2002 |
| | | | EP | 1114333 A1 | 11-07-2001 |
| | | | NO | 20010674 A | 03-05-2001 |
| | | | WO | 0016127 A1 | 23-03-2000 |
| GB 2176605 | A | 31-12-1986 | AU | 580422 B2 | 12-01-1989 |
| | | | AU | 5872886 A | 18-12-1986 |
| | | | CA | 1263470 A1 | 28-11-1989 |
| | | | CN | 86103768 A ,B | 31-12-1986 |
| | | | ES | 8801735 A1 | 16-04-1988 |
| | | | FR | 2583525 A1 | 19-12-1986 |
| | | | JP | 1980684 C | 17-10-1995 |
| | | | JP | 7013660 B | 15-02-1995 |
| | | | JP | 61290380 A | 20-12-1986 |
| | | | NL | 8601549 A ,B, | 02-01-1987 |
| | | | NO | 860575 A ,B, | 15-12-1986 |

EPO FORM P0459

For more details about this annex : see Official Journal of the European Patent Office, No. 12/82